(19) **Europäisches Patentamt**
**European Patent Office**
**Office européen des brevets**

(11) **EP 1 711 256 B1**

(12) **EUROPEAN PATENT SPECIFICATION**

(45) Date of publication and mention
of the grant of the patent:
**24.02.2010 Bulletin 2010/08**

(51) Int Cl.:
*B01J 19/24* (2006.01)    *C08F 10/02* (2006.01)
*F28F 1/40* (2006.01)

(21) Application number: **04808782.9**

(22) Date of filing: **13.12.2004**

(86) International application number:
**PCT/NL2004/000866**

(87) International publication number:
**WO 2005/065818 (21.07.2005 Gazette 2005/29)**

(54) **TUBULAR POLYMERISATION REACTOR FOR THE PREPARATION OF POLYETHYLENE**

POLYMERISATIONS-ROHRREAKTOR FÜR DIE HERSTELLUNG VON POLYETHYLEN

REACTEUR DE POLYMERISATION TUBULAIRE POUR LA PREPARATION DE POLYETHYLENE

(84) Designated Contracting States:
**AT BE BG CH CY CZ DE DK EE ES FI FR GB GR HU IE IS IT LI LT LU MC NL PL PT RO SE SI SK TR**

(30) Priority: **06.01.2004 NL 1025171**

(43) Date of publication of application:
**18.10.2006 Bulletin 2006/42**

(73) Proprietor: **Saudi Basic Industries Corporation**
**11422 Riyadh (SA)**

(72) Inventors:
• **HEM, Van Der, Sjoerd**
**NL-6222 XW Maastricht (NL)**

• **MUTSERS, Stanislaus, Martinus, Petrus**
**NL-6166 EH Geleen (NL)**
• **BONTE, Geert, Imelda, Valerie**
**6160 GA GELEEN (NL)**

(74) Representative: **Krijgsman, Willem**
**Sabic Petrochemicals B.V.**
**Corporate Patent Group - Geleen Office**
**P.O. Box 3008**
**6160 GA Geleen (NL)**

(56) References cited:
**EP-A- 0 692 693        FR-A- 2 175 235**
**FR-A- 2 416 209        GB-A- 1 569 518**
**US-A1- 2002 159 934    US-B1- 6 429 268**

**Description**

The invention relates to a process for the preparation of a homopolymer or a copolymer of ethylene in a tubular polymerisation reactor at a temperature between 40°C to 375°C and a reactor inlet pressure between 50 MPa and 500 MPa.

A high pressure tubular polymerisation of ethylene results in low density polyethylene (LDPE) which can be used alone, blended or coextruded for a variety of packaging, construction, agricultural, industrial and consumer applications. The largest application of LDPE is in films produced either by the blown or cast extrusion process in both mono and coextrusions. Films made of LDPE have to exhibit for example good optical properties, strength, flexibility, sealability and/or chemical inertness. In this application gloss is an important characteristic because for most consumer items, "eye-appeal" is an important consideration in packaging. Consumers often make purchasing decisions based solely on the appearance of a product. High gloss packaging increases the appeal of a package and increases the likelihood of purchase by a consumer. A package with "tears" or damage decreases the likelihood of its selection. Film extruders and converters are aware of the need for an abuse resistant and high clarity package especially for retail items. As an example the packaging industry has experienced a surge in new designs. These range from zippered, stand-up pouches to high gloss form, fill, and seal packages for food items. Such packages require for example low haze and high gloss film for their sophisticated multicolor graphic printing. There is a continuous need to obtain films having improved gloss.

The object of the invention is to provide a polymer that results in a film showing improved gloss.

This object is achieved by a process in a reactor, wherein the inside surface of the reactor is profiled and due to the profiling the cross-sectional area of the tube is non-circular.

The tubular reactor will generally be built up from tube segments which are connected to each other by cone-rings. The profile can be provided both on a tube segment and on a cone-ring.

The ethylene polymer obtained by the process in the reactor according to the present invention results in films having improved gloss.

A tubular reactor suitable for high pressure polymerisation of ethylene is known from US-A 4.452.956. This reactor contains a separate insert that is clamped in the tube, with the process stream moving between the insert and the inside surface of the reactor tube. The insert to some extent improves the heat transfer performance of the reactor. However, the presence of the insert in the process stream is also a safety risk because this element can come loose as a result of large mechanical forces in the process stream. This can lead to serious damage and to loss of production. Said mechanical forces are exerted on the insert during normal operation, during decompression (when the reactor pressure must be relieved within a few seconds in an emergency situation) and during "bumping" (application of high-frequency pressure variations). Another disadvantage is that due to the dead zones between the insert and the inside surface of the tube polymer build-up will occur because no refreshment of the process stream takes place there.

According to a preferred embodiment of the present invention the profile forms a solid and integral body with the tube segment and/or with the cone-ring. This profile cannot come loose, which is why there is no safety risk.

Additionally advantages of the invention are the reduced built-up of polymer on the reactor wall during the polymerisation and the improved heat transfer during the exothermal polymerisation.

Due to the profiling the cross-sectional area of the tube is non-circular and the reactor tube is designed in such a way that the following applies to each axial position where the inside wall is profiled with a profile:

$$0 \quad < \quad A/L^2 \quad < \quad 25/(100\pi)$$

where:

A= the area formed by the cross section of the reactor tube perpendicular to the axial components of the velocity vectors of the process stream and completely occupied by the process stream and outwardly bounded by the profiled inner surface of the tube (m$^2$) and
L= the circumference of A which outwardly bounds the process (m).

According to a preferred embodiment of the invention:

$$10/(100\pi) \quad < \quad A/L^2 \quad < \quad 22/(100\pi)$$

The profile can be provided both uninterrupted and, singly or multiply, interrupted over the tube length.

According to a preferred embodiment of the invention at least 1/40,000th part (0.0025%) of the total reactor tube length is provided with a profile.

Even if only such a small length (relative to the total reactor tube length) is provided with the profile, this results already in the desired improvements.

Examples of suitable profiles are concave, hollow or upright ridges. A ridge may consist of a single ridge and it is also possible that a profile consists of several ridges.

A ridge is positioned at angle $\alpha$ to the main direction of flow. The angle $\alpha$ is 0° when the ridge runs in the axial length direction parallel to the main direction of flow. The angle $\alpha$ between the ridge and the main direction of flow may range between:

$$0° \leq \alpha < 90°.$$

Preferably, multiple ridges have the same angle $\alpha$ to the main direction of flow.

According to a preferred embodiment of the invention angle $\alpha$ lies between:

$$3° < \alpha < 87°.$$

According to a further preferred embodiment angle $\alpha$ lies between:

$$10° < \alpha < 80°.$$

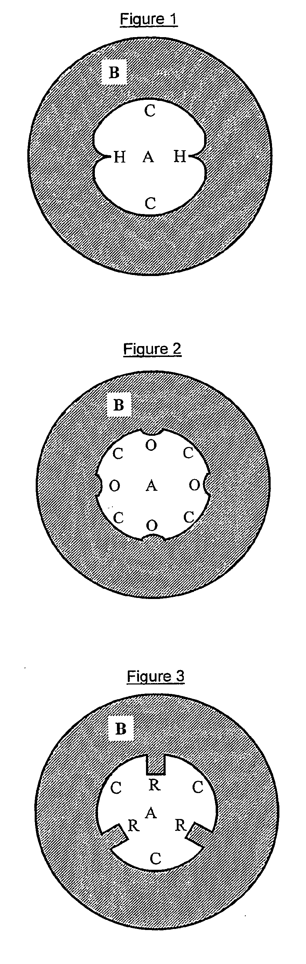

Figure 1 shows the front view of a tube B that has an effective area A according to the above definition. The tube's inside surface is determined by two hollow ridges H that are solid and form an integral part of the tube and the circular sections C.

Figure 2 shows the front view of a tube B with four concave ridges O.

Figure 3 shows the front view of a tube B with three upright ridges R.

The profile height of a ridge generally lies between $0.01\sqrt{\dfrac{A}{\pi}}$ and $\sqrt{\dfrac{A}{\pi}}$ and preferably between $0.1\sqrt{\dfrac{A}{\pi}}$ and $0.7\sqrt{\dfrac{A}{\pi}}$.

According to a preferred embodiment of the invention the profile consists of 2 solid hollow ridges having an angle $\alpha$ between 50° and 75° and a profile height of $\sqrt{\dfrac{A}{\pi}}$ of both ridges.

According to another preferred embodiment of the invention the profile is provided at a distance smaller than $\sqrt{\dfrac{A}{\pi}}$ from an initiator injection point.

If the profile is applied in the area surrounding an initiator injection point, for example at a distance smaller than $\sqrt{\dfrac{A}{\pi}}$, then it is possible to employ known injection techniques such as those described in for example EP-A-449092 and in DE-A-10060372.

During the polyethylene high-pressure process polyethylene is prepared by radical polymerisation in supercritical ethylene. The polymerisation can be started by metering an initiator such as for example an organic peroxide, azodicarboxylic acid ester, azodicarboxylic acid dinitrile and hydrocarbons that decompose into radicals. Oxygen and air are also are suitable to serve as an initiator. The ethylene, which is compressed to the desired pressure, flows through the reactor tube which is provided on the outside with a jacket through which cooling water flows in order to remove the developed heat of reaction via the wall. This reactor has a length between for example 1000 meters and 3000 meters and an internal diameter between for example 0.01 meters and 0.10 meter. The incoming ethylene is first heated to the decomposition temperature of the initiator, whereupon an initiator solution is metered and the polymerisation subsequently starts. The desired peak temperature is attained by controlling the quantity of initiator. Thereafter the mixture cools and, after the temperature has dropped to a sufficiently low level, initiator is metered one or more times again via one of the initiator injection points. The amount of injection points may range for example between 2 and 5. Downstream from the reactor the obtained product is transported to the product silos after for example extrusion, separation and drying.

Generally the temperature in the reaction zone of the reactor ranges between 40°C and 375° C and preferably between 150° C and 330° C.

Generally the reactor inlet pressure lies between 50 MPa and 500 MPa where reactor inlet pressure refers to the (total) pressure at which the feed stream leaves the compressor and enters the reactor.

Preferably this pressure ranges between 150 MPa and 400 MPa.

The tubular reactor used in the process according to the invention is suitable both for the preparation of a homopolymer of ethylene and for the preparation of a copolymer of ethylene and one or more monomers copolymerisable therewith. Suitable comonomers are for example $\alpha$-olefins with 2-12 C atoms, $\alpha,\beta$ ethylenically unsaturated carboxylic acid, $\alpha,\beta$ ethylenically unsaturated $C_{4-15}$ carboxylic acid esters or their anhydrides. Examples of suitable $\alpha$-olefins to be applied as a comonomer are ethylene, propylene and/or butene. Examples of suitable $\alpha,\beta$ ethylenically unsaturated carboxylic acids are maleic acid, fumaric acid, itaconic acid, acrylic acid, methacrylic acid and/or crotonic acid. Examples of $\alpha,\beta$ ethylenically unsaturated $C_{4-15}$ carboxylic acid esters or their anhydrides are methylmethacrylate, ethylacrylate, n-butyl methacrylate, vinyl acetate, methacrylic acid anhydride, maleic acid anhydride and/or itaconic acid anhydride.

The quantity of comonomer in the polymer is dependent on the desired application and is customarily lower than 20wt%.

Suitable organic peroxides are for example peroxyester, peroxyketone, peroxyketal and peroxycarbonate such as di-2-ethylhexyl-peroxydicarbonate, diacetylperoxydicarbonate, dicyclohexyl-peroxydicarbonate, tert.-amylperpivalate, cumyl perneodecanoate, tert.-butylperneodecanoate, tert.-butyl perpivalate, tert.-butylpermaleinate, tert.-butylperisononanoate, tert.-butylperbenzoate, tert,-butylperoxy-2-ethylhexanoate, tert.-butyl-hydroperoxide, d-tert, butyl peroxide, di-isopropylbenzol hydroperoxide, di-isononanoyl peroxide, didecanoylperoxide, cumol hydroperoxide, methyl isobutyl ketone hydroperoxide, 2.2-bis-(tert.-butylperoxy)-butane and/or 3.4-dimethyl-3.4-diphenylhexane. Also bifunctional peroxides including for example 2,5-dimethyl-2,5-di-tertiair-butylperoxyhexane, 2,5-dimethyl-2,5-tertiair-peroxyhexyne-3 3,6,9-triethyl-3,6,9-trimethyl-1,4,7-triperoxononane, 3,3,6,6,9,9-hexamethyl-1,2,4,5-tetraoxacyclononane, n-ethyl-4,4-di-tertiair-butylperoxyvalerate, 1,1-di-tertiair-butylperoxy-3,3,5-trimethylcyclohexane, ethyl-3,3-di-tertiair-butylperoxybutyrate 1,1-di-tertiair-butylperoxycyclohexane, 2,2-di-tertiair-butylperoxybutane ethyl-3,3-di-tertair-amylperoxybutyrate, 2,2-di-4,4-di-tertiair-butylperoxycyclohexylpropane, methyl-isobutyl-peroxide, 1,1-di-tertiair-amylperoxycyclohexane, 1,1-di-tertiair-butylperoxycyclohexane, 2,5-di-methyl-2,5-di-2-ethyl-hexanoylperoxyhexane and/or 1,4-di-tertiair-butylperoxycarbocyclohexane may be applied.

The reaction can be optimally controlled by metering different initiators or mixtures of initiators at the different initiator injection points. The initiator concentration generally lies between 0.5 ppm and 100 ppm relative to the quantity of monomer. During the polymerisation it is also possible to add for example inhibitors, scavengers and/or a chain regulator (such as an aldehyde, a ketone or an aliphatic hydrocarbon). Examples of suitable chain regulators are propane, propylene and propione aldehyde.

Generally the density of the obtained polyethylene (LDPE) ranges between 915 kg/m$^3$ and 935 kg/m$^3$ (according to ISO1183) and the melt index ranges between 0.10 dg/minute and 100 dg/minute (according to ASTM 1238). These polymers can be applied in for example the film segment, in the extrusion coating segment or in packagings.

The invention is elucidated on the basis of the following non-limiting examples.

Example I

Ethylene was polymerised in the presence of di tertiair butyl peroxide to form polyethylene homopolymer with a melt index of 0.29 dg/minute in the reactor according to the invention. The reactor inlet pressure amounted to 270 MPa, the outlet pressure amounted to 200 MPa. The total reactor length amounted to 3500 m and the internal tube diameter was 0.05 m. The applied peak temperature was 305°C. The profile with ratio $A/L^2 = 20/(100\ \pi)$ and angle $\alpha = 55°$ had been provided over 1/31.429th part (0.0032%) of the total length of the reactor. The profile had been provided at the first initiator injection point.

Comparative example A

Ethylene was polymerised to form polyethylene homopolymer with a melt index of 0.29 dg/minute in the reactor, which was of the same design as the one in Example I, the only difference being that the reactor of this Comparative Example A had not been provided with a profile.

Comparison of the gloss of the products obtained in Example I and in Comparative Example A showed +3 points of gloss improvement (ASTM D2457 method) of product I relative to product A.

Example II

Ethylene was polymerised in the presence of di tertiair butyl peroxide to form polyethylene homopolymer with a melt index of 1.9 dg/minute in the reactor according to the invention. The reactor inlet pressure amounted to 250 Mpa, the outlet pressure amounted to 200 MPa. The total reactor length amounted to 3500 m and the internal tube diameter was 0.05 m. The applied peak temperature was 315°C. The profile with ratio $A/L^2 = 12/(100\ \pi)$ and angle $\alpha = 70°$ had been provided over 1/31.429th part (0.0032%) of the total length of the reactor. The profile had been provided at an initiator injection point.

Comparative example B

Example II was repeated the only difference being that the reactor had not been provided with a profile.
Comparison of the conversion showed an improvement in Example II of +0.2% conversion improvement (relative to Comparative Example B), conversion being defined as the quotient of the LDPE production rate [tonnes/hour] and the total gas flow [tonnes/hour] through the reactor. The improvement in conversion is a measure of the improved heat transfer as a result of the presence of the profile.

**Claims**

1. A process for the preparation of a homopolymer or a copolymer of ethylene in a tubular polymerisation reactor at a temperature between 40°C to 375°C and a reactor inlet pressure of between 50 MPa and 500 MPa, **characterised in that** the inside surface of the reactor is profiled and due to the profiling the cross-sectional area of the tube is non-circular.

2. A process according to Claim 1 **characterised in that** the profile is provided on a tube segment and/or on a cone-ring between the tube segments.

3. A process according to one of Claims 1-2 **characterised in that** the profile forms a solid and integral body with the tube segment and/or with the cone-ring.

4. A process according to any one of Claims 1-3 **characterised in that** the following applies to each axial position where the inside wall is profiled with a profile:

$$0 \quad < \quad A/L^2 \quad < \quad 25/(100\pi)$$

   where

   A= the area formed by the cross section of the reactor tube perpendicular to the axial components of the velocity vectors of the process stream and completely occupied by the process stream and outwardly bounded by the profiled inner surface of the tube ($m^2$) and
   L= the circumference of A which outwardly bounds the process (m).

5. A process according to Claim 4 **characterised in that**

$$10/(100\pi) \quad < \quad A/L^2 \quad < \quad 22/(100\pi)$$

6. A process according to any one of Claims 1-5 **characterised in that** at least 1/40,000th part (0.0025%) of the total reactor tube length is provided with a profile.

7. A process according to any one of Claims 1-6 **characterised in that** a profile consists of one or more ridges.

8. A process according to Claim 7 **characterised in that** a ridge is positioned at an angle $\alpha$ to the main direction of flow wherein $0° \leq \alpha < 90°$.

9. A process according to Claim 8 **characterised in that** multiple ridges have the same angle $\alpha$ to the main direction of flow.

10. A process according to either of Claims 8-9 **characterised in that** the angle $\alpha$ lies between $3° < \alpha < 87°$.

11. A process according to any one of Claims 7-10, **characterised in that** the profile height of a ridge lies between

$$\sqrt{\frac{A}{\pi}} \quad \text{and} \quad \sqrt{\frac{A}{\pi}} \quad .$$

12. A process according to any one of Claims 7-11 **characterised in that** the profile consists of 2 solid hollow ridges

having an angle $\alpha$ between 50° and 75° and a profile height of $\sqrt{\frac{A}{\pi}}$ .

13. A process according to any one of Claims 1-12 **characterised in that** the profile is provided at a distance smaller than $\sqrt{\frac{A}{\pi}}$ from an initiator injection point.

**Patentansprüche**

1. Verfahren zur Herstellung eines Homopolymers oder Copolymers von Ethylen in einem rohrförmigen Polymerisationsreaktor bei einer Temperatur zwischen 40°C und 375°C und einem Reaktoreinlaßdruck zwischen 50 MPa und 500 MPa, **dadurch gekennzeichnet, daß** die Innenfläche des Reaktors profiliert ist und die Querschnittsfläche des Rohrs infolge der Profilierung nichtkreisförmig ist.

2. Verfahren nach Anspruch 1, **dadurch gekennzeichnet, daß** das Profil auf einem Rohrsegment und/oder einem Kegelring zwischen den Rohrsegmenten vorgesehen ist.

3. Verfahren nach einem der Ansprüche 1-2, **dadurch gekennzeichnet, daß** das Profil mit dem Rohrsegment und/oder mit dem Kegelring einen massiven und integralen Körper bildet.

4. Verfahren nach einem der Ansprüche 1-3, **dadurch gekennzeichnet, daß** für jede axiale Position, an der die Innenwand mit einem Profil profiliert ist, folgendes gilt:

$$0 \quad < \quad A/L^2 \quad < 25/(100\pi)$$

wobei

A = die durch den Querschnitt des Reaktorrohrs senkrecht zu den axialen Komponenten der Geschwindigkeitsvektoren des Prozeßstroms gebildete und vollständig durch den Prozeßstrom eingenommene und nach außen hin durch die profilierte Innenfläche des Rohrs begrenzte Fläche ($m^2$) und
L = der Umfang von A, der den Prozeßstrom nach außen hin begrenzt (m).

5. Verfahren nach Anspruch 4, **dadurch gekennzeichnet, daß**

$$10/(100\pi) \quad < \quad A/L^2 \quad < 22/(100\pi)$$

6. Verfahren nach einem der Ansprüche 1-5, **dadurch gekennzeichnet, daß** mindestens 1/40.000stel (0,0025%) der gesamten Reaktorrohrlänge mit einem Profil versehen ist.

7. Verfahren nach einem der Ansprüche 1-6, **dadurch gekennzeichnet, daß** ein Profil aus einem oder mehreren Vorsprüngen besteht.

8. Verfahren nach Anspruch 7, **dadurch gekennzeichnet, daß** ein Vorsprung in einem Winkel $\alpha$ zur Hauptströmungs-richtung positioniert ist, wobei $0° \leq \alpha < 90°$.

9. Verfahren nach Anspruch 8, **dadurch gekennzeichnet, daß** mehrere Vorsprünge den gleichen Winkel $\alpha$ zur Hauptströmungsrichtung aufweisen.

10. Verfahren nach einem der Ansprüche 8-9, **dadurch gekennzeichnet, daß** der Winkel $\alpha$ zwischen $3° < \alpha < 87°$ liegt.

11. Verfahren nach einem der Ansprüche 7-10, **dadurch gekennzeichnet, daß** die Profilhöhe eines Vorsprungs zwischen $\sqrt{\dfrac{A}{\pi}}$ und $\sqrt{\dfrac{A}{\pi}}$ liegt.

12. Verfahren nach einem der Ansprüche 7-11, **dadurch gekennzeichnet, daß** das Profil aus 2 massiven hohlen Vorsprüngen mit einem Winkel $\alpha$ zwischen 50° und 75° und einer Profilhöhe von $\sqrt{\dfrac{A}{\pi}}$ besteht.

13. Verfahren nach einem der Ansprüche 1-12, **dadurch gekennzeichnet, daß** das Profil in einem Abstand von weniger als $\sqrt{\dfrac{A}{\pi}}$ von einem Initiatoreinspritzpunkt vorgesehen ist.

**Revendications**

1. Procédé pour la préparation d'un homopolymère ou d'un copolymère d'éthylène dans un réacteur de polymérisation tubulaire à une température située entre 40°C et 375°C et à une pression d'entrée du réacteur située entre 50 MPa et 500 MPa, **caractérisé en ce que** la surface intérieure du réacteur est profilée et, en raison du profilage, la section transversale du tube est non circulaire.

2. Procédé selon la revendication 1, **caractérisé en ce que** le profilé est fourni sur un segment du tube et/ou sur une bague conique entre les segments du tube.

3. Procédé selon l'une des revendications 1 ou 2, **caractérisé en ce que** le profilé forme un corps solide et intégral avec le segment du tube et/ou avec la bague conique.

4. Procédé selon l'une quelconque des revendications 1 à 3, **caractérisé en ce que** la formule suivante s'applique à chaque position axiale où la paroi intérieure est profilée avec un profilé :

$$0 < A/L^2 < 25/(100\pi)$$

dans laquelle

A = la section formée par la coupe transversale du tube de réacteur perpendiculaire aux composants axiaux des vecteurs de vitesse du flux de procédé, qui est complètement occupée par le flux de procédé et qui est liée vers l'extérieur par la surface intérieure profilée du tube ($m^2$) et
L = la circonférence de A qui lie le procédé (m) vers l'extérieur.

5. Procédé selon la revendication 4, **caractérisé en ce que**

$$10/(100\pi) < A/L^2 < 22/(100\pi)$$

**6.** Procédé selon l'une quelconque des revendications 1 à 5, **caractérisé en ce qu'**au moins 1/40 000$^e$ partie (0,0025 %) de la longueur totale du tube du réacteur est fournie avec un profilé.

**7.** Procédé selon l'une quelconque des revendications 1 à 6, **caractérisé en ce qu'**un profilé est constitué d'une ou de plusieurs saillies.

**8.** Procédé selon la revendication 7, **caractérisé en ce qu'**une saillie est positionnée à un angle $\alpha$ par rapport à la direction principale du flux dans lequel $0° \leq \alpha < 90°$.

**9.** Procédé selon la revendication 8, **caractérisé en ce que** des saillies multiples possèdent le même angle $\alpha$ par rapport à la direction principale du flux.

**10.** Procédé selon l'une des revendications 8 ou 9, **caractérisé en ce que** l'angle $\alpha$ varie entre $3° < \alpha < 87°$.

**11.** Procédé selon l'une quelconque des revendications 7 à 10, **caractérisé en ce que** la hauteur du profilé d'une saillie se situe entre $0,01\sqrt{\dfrac{A}{\pi}}$ et $\sqrt{\dfrac{A}{\pi}}$ .

**12.** Procédé selon l'une quelconque des revendications 7 à 11, **caractérisé en ce que** le profilé est constitué de deux saillies creuses solides qui présentent un angle $\alpha$ variant entre 50° et 75° et une hauteur de profilé de $\sqrt{\dfrac{A}{\pi}}$ .

**13.** Procédé selon l'une quelconque des revendications 1 à 12, **caractérisé en ce que** le profilé est fourni à une distance inférieure à $\sqrt{\dfrac{A}{\pi}}$ à partir d'un point d'injection de l'initiateur.

## Figure 1

B

C

H A H

C

## Figure 2

B

C O C

O A O

C O C

## Figure 3

B

C R C

R A R

C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4452956 A
- EP 449092 A
- DE 10060372 A